# EUROPEAN PATENT SPECIFICATION

(11) **EP 1 722 299 B1**
(45) Date of publication and mention of the grant of the patent: **20.06.2007**
(21) Application number: 05252804.9
(22) Date of filing: 06.05.2005
(51) Int. Cl.: G06F 7/58

(54) **Generation of random data within a wireless mobile communication device**
Erzeugung von Zufallszahlen in einem drahtlosen Kommunikationsgerät
Génération de données aléatoires dans un dispositif de communication mobile

(43) Date of publication of application: 15.11.2006
(73) Proprietor: Research In Motion Limited, Waterloo, Ontario N2L 3W8 (CA)
(72) Inventor: Orr, Kevin H, Elmira, Ontario N3B 3C9 (CA); Rose, Scott D, Waterloo, Ontario N2K 4H5 (CA); Little, Herbert A, Waterloo, Ontario N2T 2VD (CA)
(74) Representative: Roberts, Gwilym Vaughan

(56) References cited:
- WO-A-01/95091
- US-A1- 2002 165 888
- US-A1- 2003 009 667
- US-A1- 2003 021 411
- US-B1- 6 430 170

## Description

### BACKGROUND

### 1. Field of Technology

This application generally relates to mobile wireless communication devices requiring random data for use in normal device operation.

### 2. Related Art

A need for random data in normal operation of mobile wireless communication devices is now common place. For example, secure encrypted communication requires generation of suitable encryption/decryption keys or the like from time to time. Generation of an encryption key may be required for device content (e.g., e-mail, calendar, memo pad, contacts, etc.). Wireless communication via Bluetooth or other similar techniques may also require random data inputs from time to time. It is also known that random data may be used to wipe non-volatile memory. For example, in order to insure erased data on a hard drive is unrecoverable, a technique of writing random data to the drive may be employed.

There are known techniques for generating sufficiently random data (e.g., by capturing random mouse movements of a user or the like) at a base station (e.g., a user's personal computer) and then may derive a key for communication or alternative purposes. This key may be stored on a communications server, desktop PC, as well as the handheld device. The newly captured random data and/or derived key may be transferred to associated devices from time to time when the need arises.

However, if a mobile wireless communication device is without an external source of renewable random data (e.g., a plug in connection to the user's base or desktop computer), one needs to address the need for sufficiently random data to use in the generation of a random pattern (e.g., for encryption key generation).
Typically when the stored key or random data becomes out of date and the user has connected his/her device to a base or desktop computer, they may be prompted to move a mouse around randomly for generation of a new random number pool for use as an encryption key (or to be used in generation of such key).

A problem to address is how to create the same or approximately equivalent randomness for key creation by random motion once the device no longer connects via serial/USB to the user's desktop.

US Patent No. 6,430,170 describes a system and method for generating random numbers in a wireless communication network. The noise present in the signal received by a wireless receiver is extracted to form random numbers and hence this method makes use of features existing in a wireless communications network.

A similar situation can arise with other peripherals or memory cards which attach to the device that require a method of securing data via a randomly generated pattern for encryption key creation, e.g., secure data (SD) cards, multimedia cards, compact flash, smartcards, Bluetooth accessories, etc.

### BRIEF SUMMARY

A wireless mobile communication device may include its own integral apparatus/method for generating new random data as needed or desired.

For example, such a device may include a data memory storing random data for use in data communication processes (e.g., encrypted secure processes). A transducer integrally carried as part of the mobile communication device can be adapted to produce electrically sensible output related to a physically sensible parameter. The electrically sensible output of the transducer is then captured within the mobile communication device and used to generate new random data and store it in the random data memory based on the electrically sensible output while the physical parameter is randomly varying.

The present invention is set out in independent claims 1, 7 and 13.

The present exemplary embodiments provide a general solution for locally generating random data for the purpose, for example, of generating an encryption key for securing data.

This can be accomplished locally on a mobile device if it is equipped with a method to detect, measure, and record random motion (analogous to mouse movement). There are many possible arrangements available to achieve this, e.g.:
(1) By using an accelerometer or gyroscope type of sensor the user can move the device around by tilting or gesturing in random movement. Also, the device could be placed on a flat surface and the acceleration (translational motion) could be measured (e.g., like mouse movements). The movement may be in a required direction of three dimensional space if the sensor responds preferentially in one direction.
(2) Using optical scanning technique such as with a camera that is integrated with the device, it could work like an optical mouse, i.e., the handheld could be placed on a surface for position tracking.
(3) Using as sources of random input transducers such as ambient light sensor, microphone, digital compass, fingerprint sensor, navigation input sensor devices such as a roller ball, touch screen, joystick, touch pad, etc.
(4) Outputs from different random sources can be further intermixed (e.g., via bit swapping, bit shifting, etc.) before being added to the random data pool.

The system may prompt the user to randomly move the device to generate data for creating the new random key data (analogous to a current desktop application). During a set period of time the output of the sensors can be read and this resulting random sensor data can be used to generate random key data.

As an alternative, depending on the electrical current draw of the sensor, this could be used continually, or frequently, to harvest randomness from the user. That is, the system could turn on the accelerometer or take a picture every so many seconds to gather randomness that is added to a pool of randomness whenever needed or desired. The process for administering the random pool of data can be notified by the system to intercept sensor data whenever the sensor has been enabled by another application. For example, an accelerometer may be set to detect random device motion based on preprogrammed threshold limits and interrupt the system to read the accelerometer data.

These embodiments may be realized in hardware, software or a combination of hardware and software and provide a method for internally adding randomness to wireless communication device. The exemplary embodiment is realized at least in part, by executable computer program code which may be embodied in physical program memory media.

### BRIEF DESCRIPTION OF THE DRAWINGS

These and other objects and advantages will be better understood and appreciated in conjunction with the following detailed description of exemplary embodiments taken together with the accompanying drawings, of which:
FIG. **1** is an overall system wide schematic view of an exemplary wireless email communication system incorporating a mobile wireless communication device having enhanced internal ability to add randomness to a random data pool maintained therein;
FIG. **2** is an abbreviated schematic diagram of hardware included within an exemplary mobile wireless communication device;
FIG. **3** is an exemplary abbreviated schematic flow diagram of computer software (i.e., program logic) that may be utilized in the device of FIG. **2** (e.g., during start-up) to re-initiate an update of random data being maintained in the device; and
FIG. **4** is an exemplary abbreviated schematic flow diagram of computer software (i.e., program logic) that may be utilized in the device of FIG. **2** to interface with an included transducer for generating new random data.

### DETAILED DESCRIPTION OF EXEMPLARY EMBODIMENTS

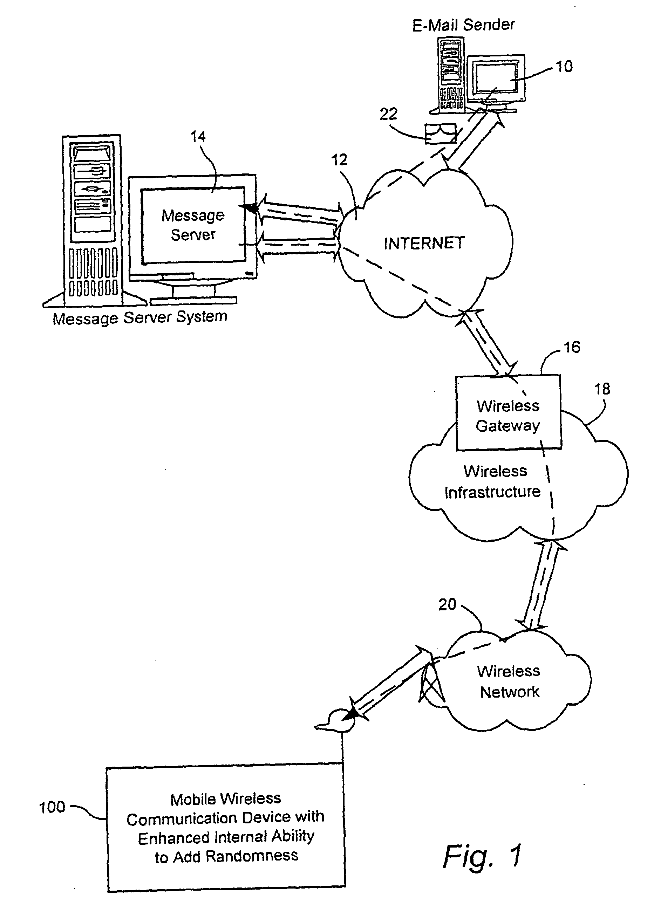

FIG. **1** is an overview of an exemplary communication system in which a wireless communication device **100** may be used in accordance with this invention. One skilled in the art will appreciate that there may be hundreds of different system topologies. There may also be many message senders and recipients. The simple exemplary system shown in FIG. **1** is for illustrative purposes only, and shows perhaps the currently most prevalent Internet email environment.

FIG. **1** shows an email sender **10,** the Internet **12,** a message server system **14,** a wireless gateway **16,** wireless infrastructure **18,** a wireless network **20** and a mobile communication device **100.**

An email sender **10** may, for example, be connected to an ISP (Internet service Provider) on which a user of the system has an account, located within a company, possibly connected to a local area network (LAN), and connected to the Internet **12,** or connected to the Internet **12** through a large ASP (application service provider) such as America Online^{™} (AOL). Those skilled in the art will appreciate that the systems shown in FIG **1** may instead be connected to a wide area network (WAN) other than the Internet, although email transfers are commonly accomplished through Internet-connected arrangements as shown in FIG. **1.**

The message server **14** may be implemented, for example, on a network computer within the firewall of a corporation, a computer within an ISP or ASP system or the like, and acts as the main interface for email exchange over the Internet **12.** Although other messaging systems might not require a message server system **14,** a mobile device **100** configured for receiving and possibly sending email will normally be associated with an account on a message server. Perhaps the two most common message servers are Microsoft Exchange^{™} and Lotus Domino^{™}. These products are often used in conjunction with Internet mail routers that route and deliver mail. These intermediate components are not shown in FIG. **1,** as they do not directly play a role in the invention described below. Message servers such as server **14** typically extend beyond just email sending and receiving; they also include dynamic database storage engines that have predefined database formats for data like calendars, to-do lists, task lists, email and documentation.

The Wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1,** a composed email message **22** is sent by the email sender **10,** located somewhere on the Internet **12.** This message **22** typically uses traditional Simple Mail Transfer Protocol (SMTP), RFC 822 headers and Multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific email address associated with the mobile device **100.** In a preferred embodiment, messages addressed to a message server account associated with a host system such as a home computer or office computer which belongs to the user of a mobile device **100** are redirected from the message server **14** to the mobile device **100** as they are received. Messages will typically be encrypted from sender to receiver by utilizing a key that is unique to a given device. Examples of two commonly used methods are the Data Encryption Standard (Triple - DES) and the Advanced Encryption Standard (AES).

Regardless of the specific mechanism controlling forwarding of messages to mobile device **100 ,** the message **22,** or possibly a translated or reformatted version thereof, is sent to wireless gateway **16.** The wireless infrastructure **18** includes a series of connections to wireless network **20.** These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex^{™} Radio Network and the DataTAC^{™} Radio Network. Examples of older voice-centric data networks include Personal Communication Systems (PCS) networks like GSM, and TDMA systems.

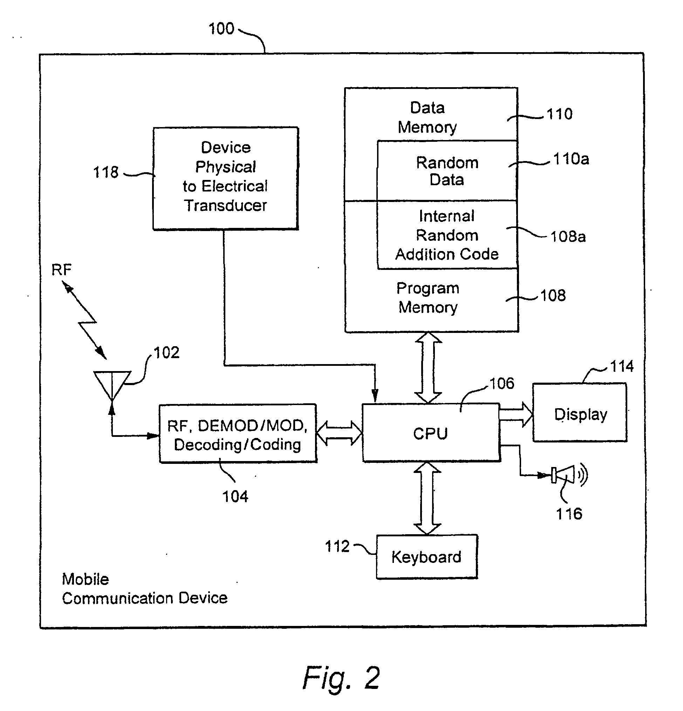

As depicted in FIG. **2,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **110**). CPU **106** also communicates with a conventional keyboard **112,** display **114** (e.g., an LCD) and audio transducer or speaker **116.** A portion of data memory **110a** is available for storing random data needed for device operations. Suitable computer program executable code is stored in portions of program memory **108a** to constitute the internal random addition capability described below. A transducer **118** provides an electrical input to the CPU **106** that corresponds to a randomized physical event. Some examples of possible physical transducers are: an accelerometer; a gyroscopic sensor; a tilt sensor; a movement sensor; optical sensor or scanner; relative position tracking device like a mouse transducer, etc. Those in the art will recognize that the list of possible transducers is virtually unlimited.

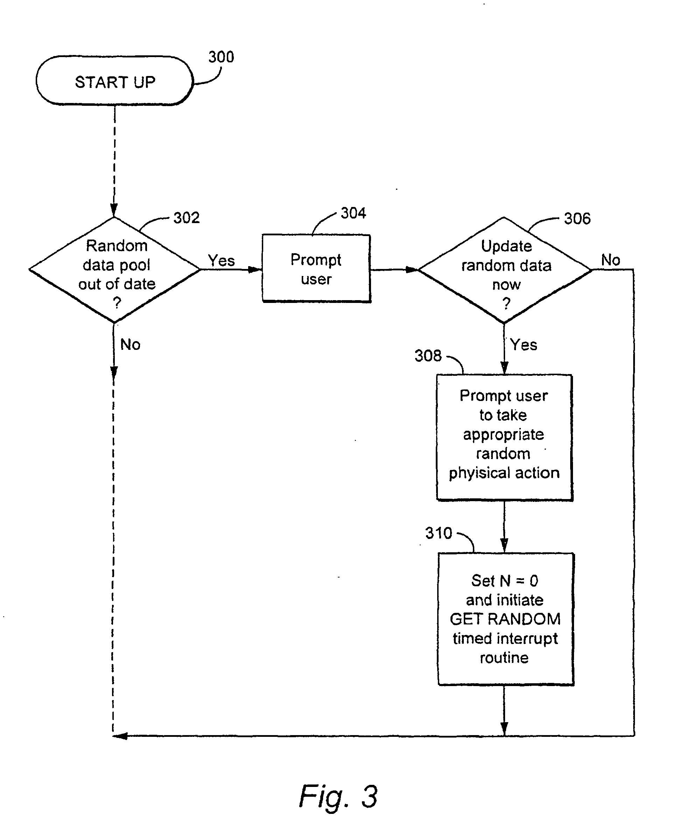

As those in the art also will appreciate, entry into the process of gathering new random data may be made in any desired way. As earlier noted, it may be effective at all times or at times whenever it is algorithmically determined to be needed or desirable. One other possibility is depicted at FIG. **3,** where, during normal booting or start-up processes entered at **300,** a test is made at an appropriate point **302** to determine whether the current random data pool in the device is out of date. If so, then the user is suitably prompted at **304** and if the user elects at **306** to update the random data at this time, then the user is further prompted at **308** to take appropriate random physical action that can be sensed by the transducer included as an integral part of the device. For example, the user may be instructed to randomly move the device in three dimensions for the next few (e.g. 15) seconds. After such instruction to the user, then a loop counter N may be set to zero and the GET timed interrupt routine may be initiated at **310.**

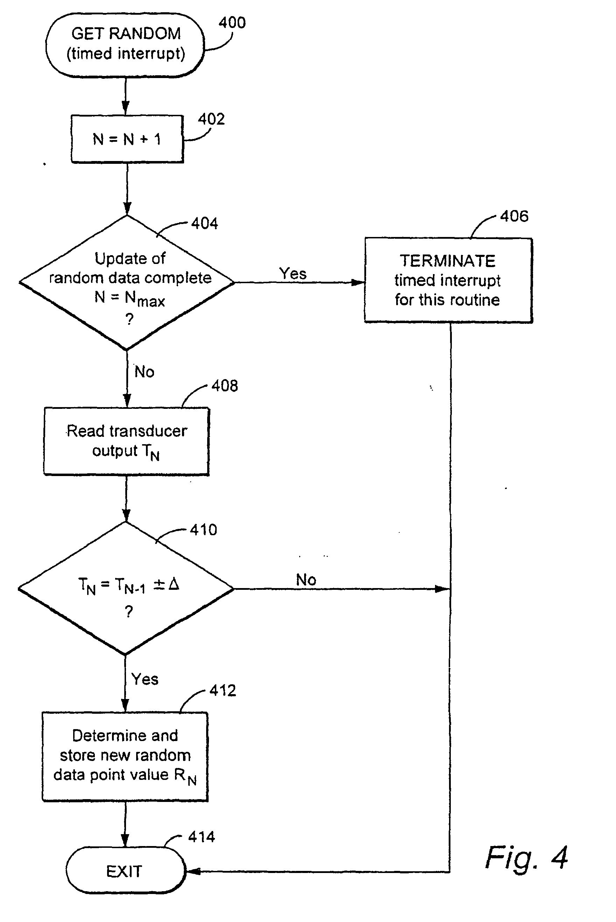

The GET RANDOM routine **400** illustrated in FIG. **4** is, in this exemplary embodiment, a timed interrupt routine while active. For example, the timed interrupt may occur at intervals of a few tens of milliseconds or the like during the interval of instructed random physical activity (e.g., 15 seconds). The loop counter N is incremented at **402** and a test is made at **404** to see whether the updating of random data process has yet been completed. If so, then the timed interrupt routine is suitably terminated at **406** (unless, of course, the system is designed so as to run continuously in which the case the just discussed steps may be eliminated).

During the process of active updating of random data, the transducer output is read at **408** and then tested at **410** to insure that there is indeed some requested physical activity taking place so as to change the transducer output by at least some predetermined increment from the last sample taken. If so, then the new current transducer output is utilized at **412** in accordance with conventional techniques to determine and store at least one new random data point value R_{N}. As will be appreciated, a suitable random data pool might comprise 64 random bits, 128 random bits, etc. which can dynamically be configured depending on the type of algorithm employed or the required need. The process may determine one or more bits of such data pool at each timed interrupt execution of this routine. The current execution instance of the timed interrupt routine is then exited at **414** until again entered at the end of another elapsed timed interrupt period.

As those in the art will appreciate, there may be many variations and modifications of the above described exemplary embodiments within the scope of the appended claims.

## Claims

1. A wireless mobile communication device (100) comprising:
a data memory (110a) storing random data therein for use in data communication processes;
a transducer (118) integrally carried as part of said mobile communication device and adapted to produce, based on random physical movement by a user, an electrically sensible output related to a physically sensible parameter; and
an electrical signal capturing circuit (106, 108) connected to said transducer and adapted to generate new random data and store it in said data memory (110a) based on said electrically sensible output while said physical parameter is randomly varying.

2. A wireless mobile communication device as in claim 1 wherein said transducer comprises at least one of the group consisting of:
an accelerometer, a gyroscopic sensor, a tilt sensor, a movement sensor, an optical sensor, an optical scanner and a relative position tracking sensor.

3. A wireless mobile communication device as in claim 1 wherein said circuit is adapted to generate new random data at timed intervals.

4. A wireless mobile communication device as in claim 1 wherein said circuit is adapted to provide the user with an option to refresh the random data when it is determined to be in need of refreshment.

5. A wireless mobile communication device as in claim 1 or 4 further comprising:
a display (14) adapted to prompt a user to refresh a random data pool by making random physical movements of the device during an interval of time.

6. A method for operating a wireless mobile communication device (100), said method comprising:
storing random data therein for use in data communication processes:
using a transducer (118) integrally carried as part of said mobile communication device to produce, based on random physical movement by a user, an electrically sensible output related to a physically sensible parameter; and
generating new random data and store it in said data memory based on said electrically sensible output while said physical parameter is randomly varying.

7. A method as in claim 6 wherein said transducer comprises at least one of the group consisting of:
an accelerometer, a gyroscopic sensor, a tilt sensor, a movement sensor, an optical sensor, an optical scanner and a relative position tracking sensor.

8. A method as in claim 6 wherein said new random data is generated at timed intervals.

9. A method as in claim 6 further comprising:
presenting a user with an option to refresh random data when it is determined to be in need of refreshment.

10. A method as in claim 6 or 9 further comprising:
prompting a user to refresh a random data pool by making random physical movements of the device during an interval of time.

11. A computer-readable storage device comprising program code adapted to carry out the method of any one of claims 6 to 10 when run on a computer.

## Patentansprüche

1. Drahtlose mobile Kommunikationsvorrichtung (100), umfassend:
Einen Datenspeicher (110a) zum Speichern von Zufallsdaten darin für eine Verwendung in Datenkommunikationsprozessen,
einen Transducer (118), der als Teil der mobilen Kommunikationsvorrichtung integral gehalten ist und geeignet ist, eine elektrisch sensible Ausgabe, die einem physikalischen sensiblen Parameter zugeordnet ist, basierend auf einer physikalischen Zufallsbewegung durch einen Benutzer zu erzeugen, und
eine elektrische Signalerfassungsschalteinrichtung (106, 108), die mit dem Transducer verbunden ist und geeignet ist, neue Zufallsdaten zu erzeugen und in dem Datenspeicher (110a), basierend auf der elektrisch sensiblen Ausgabe zu speichern, während der physikalische Parameter zufallsmäßig variiert.

2. Drahtlose mobile Kommunikationsvorrichtung nach Anspruch 1, wobei der Transducer wenigstens einen der Gruppe, die aus einem Beschleunigungsmesser, einem Kreiselsensor, einem Neigungssensor, einem Bewegungssensor, einem optischen Sensor, einem optischen Scanner und einem Relativpositionsbeobachtungssensor besteht,
umfasst.

3. Drahtlose mobile Kommunikationsvorrichtung nach Anspruch 1, wobei die Schalteinrichtung geeignet ist, neue Zufallsdaten in zeitlich gesteuerten Intervallen zu erzeugen.

4. Drahtlose mobile Kommunikationsvorrichtung nach Anspruch 1, wobei die Schalteinrichtung geeignet ist, dem Benutzer eine Option bereitzustellen, um die Zufallsdaten aufzufrischen, wenn bestimmt wird, dass eine Auffrischung erforderlich ist.

5. Drahtlose mobile Kommunikationsvorrichtung nach Anspruch 1 oder 4, weiterhin umfassend
eine Anzeigeeinrichtung (14), die geeignet ist, einen Benutzer aufzufordern, einen Zufallsdatenpool durch Vornehmen von physikalischen Zufallsbewegungen der Vorrichtung während eines Zeitintervalls aufzufrischen.

6. Verfahren zum Bedienen einer drahtlosen mobilen Kommunikationsvorrichtung (100), wobei das Verfahren umfasst:
Speichern von Zufallsdaten darin für eine Verwendung in Datenkommunikationsprozessen,
Verwenden eines Transducers (118), der als Teil der mobilen Kommunikationsvorrichtung integral gehalten ist, um eine elektrisch sensible Ausgabe, die einem physikalischen sensiblen Parameter zugeordnet ist, basierend auf einer physikalischen Zufallsbewegung durch einen Benutzer zu erzeugen, und
Erzeugen von neuen Zufallsdaten und Speichern dieser in dem Datenspeicher, basierend auf der elektrisch sensiblen Ausgabe, während der physikalische Parameter zufallsmäßig variiert.

7. Verfahren nach Anspruch 6, wobei der Transducer wenigstens einen der Gruppe, die aus
einem Beschleunigungsmesser, einem Kreiselsensor, einem Neigungssensor, einem Bewegungssensor, einem optischen Sensor, einem optischen Scanner und einem Relativpositionsbeobachtungssensor besteht,
umfasst.

8. Verfahren nach Anspruch 6, wobei die neuen Zufallsdaten in zeitlich gesteuerten Intervallen erzeugt werden.

9. Verfahren nach Anspruch 6, weiterhin umfassend:
Bereitstellen einer Option für den Benutzer, um Zufallsdaten aufzufrischen, wenn bestimmt wird, dass eine Auffrischung erforderlich ist.

10. Verfahren nach Anspruch 6 oder 9, weiterhin umfassend:
Auffordern eines Benutzers, einen Zufallsdatenpool durch Vornehmen von physikalischen Zufallsbewegungen der Vorrichtung während eines Zeitintervalls aufzufrischen.

11. Computer-lesbare Speichervorrichtung, die einen Programmcode umfasst, welcher geeignet ist, das Verfahren nach einem der Ansprüche 6 bis 10 beim Ablaufen auf einem Computer durchzuführen.

## Revendications

1. Dispositif de communication mobile sans fil (100), comprenant :
une mémoire de données (110a) stockant des données aléatoires destinées à être utilisées dans des traitements de communication de données ;
un transducteur (118) faisant partie intégrante dudit dispositif de communication mobile et apte à produire, sur la base d'un mouvement physique aléatoire d'un utilisateur, une sortie détectable électriquement liée à un paramètre détectable physiquement ; et
un circuit d'acquisition de signal électrique (106, 108) connecté audit transducteur et apte à générer de nouvelles données aléatoires et à les stocker dans ladite mémoire de données (110a) sur la base de ladite sortie détectable électriquement pendant que ledit paramètre physique varie aléatoirement.

2. Dispositif de communication mobile sans fil selon la revendication 1, dans lequel ledit transducteur comprend au moins l'un du groupe constitué :
d'un accéléromètre, d'un capteur gyroscopique, d'un capteur d'inclinaison, d'un capteur de mouvement, d'un capteur optique, d'un dispositif de balayage optique et d'un capteur de poursuite de position relative.

3. Dispositif de communication mobile sans fil selon la revendication 1, dans lequel ledit circuit est apte à générer de nouvelles données aléatoires à des intervalles de temps fixés.

4. Dispositif de communication mobile sans fil selon la revendication 1, dans lequel ledit circuit est apte à fournir à l'utilisateur une option de renouvellement des données aléatoires lorsqu'il est déterminé qu'elles nécessitent un renouvellement.

5. Dispositif de communication mobile sans fil selon la revendication 1 ou 4, comprenant en outre :
un afficheur (14) apte à inviter un utilisateur à renouveler un groupe de données aléatoires en effectuant des mouvements physiques aléatoires avec le dispositif pendant un intervalle de temps.

6. Procédé de mise en fonctionnement d'un dispositif de communication mobile sans fil (100), ledit procédé consistant à :
stocker dans celui-ci des données aléatoires pouvant être utilisées dans des traitements de communication de données ;
utiliser un transducteur (118) faisant partie intégrante dudit dispositif de communication mobile pour produire, sur la base d'un mouvement physique aléatoire d'un utilisateur, une sortie détectable électriquement liée à un paramètre détectable physiquement ; et
générer de nouvelles données aléatoires et les stocker dans ladite mémoire sur la base de ladite sortie détectable électriquement pendant que ledit paramètre physique varie aléatoirement.

7. Procédé selon la revendication 6, dans lequel ledit transducteur comprend au moins l'un du groupe constitué :
d'un accéléromètre, d'un capteur gyroscopique, d'un capteur d'inclinaison, d'un capteur de mouvement, d'un capteur optique, d'un dispositif de balayage optique et d'un capteur de poursuite de position relative.

8. Procédé selon la revendication 6, dans lequel lesdites nouvelles données aléatoires sont générées à des intervalles de temps fixés.

9. Procédé selon la revendication 6, consistant en outre à :
présenter à un utilisateur une option de renouvellement de données aléatoires lorsqu'il est déterminé qu'elles nécessitent un renouvellement.

10. Procédé selon la revendication 6 ou 9, consistant en outre à :
inviter un utilisateur à renouveler un groupe de données aléatoires en effectuant des mouvements physiques aléatoires avec le dispositif pendant un intervalle de temps.

11. Dispositif de stockage lisible par ordinateur comprenant un code de programme apte à mettre en oeuvre le procédé selon l'une quelconque des revendications 6 à 10 lorsqu'il est exécuté sur un ordinateur.
